# EUROPÄISCHE PATENTSCHRIFT

(11) **EP 1 121 684 B1**
(45) Veröffentlichungstag und Bekanntmachung des Hinweises auf die Patenterteilung: **24.07.2002**
(21) Anmeldenummer: 99970775.5
(22) Anmeldetag: 03.09.1999
(51) Int. Cl.: G10L 13/02, G10L 15/22

(54) **VERFAHREN UND VORRICHTUNG ZUR AUSGABE VON INFORMATIONEN UND/ODER MELDUNGEN PER SPRACHE**
METHOD AND DEVICE FOR INFORMATION AND/OR MESSAGES BY MEANS OF SPEECH
PROCEDE ET DISPOSITIF PERMETTANT DE SORTIR DES INFORMATIONS ET/OU DES MESSAGES PAR LANGUE

(30) Priorität: 16.10.1998 DE 19847879; 25.02.1999 DE 19908137
(43) Veröffentlichungstag der Anmeldung: 08.08.2001
(73) Patentinhaber: Volkswagen Aktiengesellschaft, 38436 Wolfsburg (DE)
(72) Erfinder: BÖCKMANN, Ingo, D-38551 Ribbesbüttel (DE); EBERT, Holger, D-90429 Nürnberg (DE); HEIMERMANN, Matthias, D-38302 Wolfenbüttel (DE)
(86) Internationale Anmeldenummer: EP9906476
(87) Internationale Veröffentlichungsnummer: WO0023982

(56) Entgegenhaltungen:
- DE-A- 19 646 634
- DE-C- 19 533 541
- US-A- 4 623 970
- US-A- 5 559 927
- PATENT ABSTRACTS OF JAPAN vol. 1997, no. 01, 31. Januar 1997 (1997-01-31) & JP 08 247779 A (HONDA MOTOR CO LTD), 27. September 1996 (1996-09-27)
- MAZOR B ET AL: "THE DESIGN OF SPEECH-INTERACTIVE DIALOGS FOR TRANSACTION-AUTOMATIONSYSTEMS" SPEECH COMMUNICATION,NL,ELSEVIER SCIENCE PUBLISHERS, AMSTERDAM, Bd. 17, Nr. 3/04, 1. November 1995 (1995-11-01), Seiten 313-320, XP000641899 ISSN: 0167-6393

## Beschreibung

Die Erfindung betrifft ein Verfahren und eine Vorrichtung zur Ausgabe von Informationen und/oder Meldungen mindestens eines elektrischen Gerätes per Sprache.

Verfahren bzw. Vorrichtungen dieser Art werden allgemein in sogenannten Sprachdialogbzw. Sprachbediensystemen z.B. für Fahrzeuge, Computer, Roboter, Maschinen, Anlagen usw. eingesetzt.

Ein Sprachdialogsystem (SDS) läßt sich i.a. im wesentlichen auf folgende Komponenten reduzieren:
- Spracherkennungssystem, welches ein eingesprochenes Kommando ("Sprachkommando") mit anderen erlaubten Sprachkommandos vergleicht und eine Entscheidung trifft, welches Kommando aller Wahrscheinlichkeit nach eingesprochen wurde,
- Sprachausgabe, welche die zur Benutzerführung erforderlichen Sprachbefehle und Signalisierungstöne ausgibt und ggf. das Erkennergebnis rückmeldet,
- Dialog- und Ablaufsteuerung, um dem Benutzter zu verdeutlichen, welche Art von Eingabe erwartet wird, bzw. um zu prüfen, ob die erfolgte Eingabe konsistent ist mit der Aufforderung und mit dem momentanen Status der Applikation, und um die resultierende Aktion bei der Applikation (z.B. dem zu steuernden Gerät) anzustoßen,
- Kontrollinterface als Schnittstelle zur Applikation: Dahinter verbergen sich Hard- und Softwaremodule, um verschiedene Aktuatoren bzw. Rechner anzusteuern, die die Applikation beinhalten,
- Applikation, die per Sprache angesteuert wird: Das kann z.B. ein Bestell- oder Auskunftssystem, ein CAE-Arbeitsplatz oder ein behindertengerechter Rollstuhl sein.

Ein solches Sprach-Dialog-System ist beispielsweise aus der DE 195 33 541 C1 bekannt. Zur Verbesserung der Akzeptanz eines solchen Mensch-Maschinen-Dialogs wird dort beispielsweise vorgeschlagen, für die Kommandos synonyme Worte bzw. unterschiedliche Aussprachevarianten zu verwenden oder aber die Wörter in den Kommandos umzustellen, beispielsweise "Größerer Radius bei linkem Kreis" oder alternativ hierzu "Bei linkem Kreis größerer Radius". Des weiteren wird vorgeschlagen, durch einen erweiterten Speicher ein multilinguales sprecherunabhängiges Dialogsystem aufzubauen, wobei wahlweise zwischen den Dialogsystemen verschiedener Sprachen umgeschaltet werden kann. Weiter wird vorgeschlagen, sogenannte Ellipsen einzubinden, d.h. Verzicht auf Wiederholung ganzer Kommandosätze und statt dessen Kommandos wie "höher", "stärker" oder "weiter", wobei dann das Sprachdialog-System diese den vorangegangenen Kommandos zuordnet. Des weiteren kann das Sprach-Dialog-System bei unsicherem Erkennen Rückfragen wie beispielsweise "Wie bitte?", "Bitte wiederholen" oder "Und weiter?" stellen oder bestimmte Anregungen wie "Bitte lauter" ausgeben. All diese Maßnahmen dienen dazu, eine monotone Kommunikation zu vermeiden und den Dialog stärker einer Mensch-Mensch-Kommunikation anzunähern. Zur Verbesserung der Kommunikation wird das Sprachsystem mit einem optischen Anzeigemedium gekoppelt, auf dem erkannte Befehle zu Kontrollzwecken angegeben werden. Weiter ermöglicht das optische Anzeigemedium die Darstellung der vom Zielgerät als Reaktion auf das Sprachkommando eingestellten Funktionen und/oder verschiedener Funktionen/Alternativen, die per Sprachkommando anschließend eingestellt bzw. ausgewählt werden können. Nachteilig an der bekannten Vorrichtung und des damit durchgeführten Verfahrens ist, daß trotz der dargestellten Verbesserungen die Sprachausgabe aufgrund ihrer Monotonie den Nutzer ermüdet, so daß dessen Reaktionszeit bei handlungskritischen Aktionen zu groß ist. Ein weiteres Problem ist, daß bei Erkennungsschwierigkeiten die bekannten Sprach-Dialog-Systeme eine Endlosschleife durchlaufen und dem Nutzer immer wieder die gleiche Aufforderung ausgeben, so daß der work-flow unterbrochen ist.

Aus der JP-A-8247779 ist ein Verfahren und eine Vorrichtung zur Ausgabe von Informationen und/oder Meldungen mindestens eines elektrischen Gerätes per Sprache bekannt, wobei die für die Sprachausgabe benötigten Informationen und/oder Meldungen in einem Sprachspeicher abgelegt sind und von einer Verarbeitungseinreichtung nach Anforderung ausgelesen und über eine akustische Ausgabeeinrichtung ausgegeben werden, wobei zur besseren Wahrnehmung vorgeschlagen wird, die wichtigen Teile einer Sprachausgabe-Mitteilung anders oder mehr zu betonen als den Rest der Mitteilung.

Der Erfindung liegt daher das technische Problem zugrunde, ein Verfahren und eine Vorrichtung zur Ausgabe von Informationen und/oder Meldungen per Sprache zu schaffen, bei denen eine verbesserte Aufmerksamkeit des Nutzers erreicht wird.

Die Lösung des technischen Problems ergibt sich durch die Merkmale der Patentansprüche 1 und 10. Weitere vorteilhafte Ausgestaltungen der Erfindung ergeben sich aus den Unteransprüchen.

Durch die Verwendung unterschiedlicher Intonationen, wobei bei handlungskritischen Anweisungen die Meldungen eine Befehlsintonation aufweisen, wird bereits unmittelbar bei der Sprachausgabe die Aufmerksamkeit des Nutzers geweckt, so daß die Reaktionszeit zur Durchführung der geforderten Anweisung erheblich verkürzt wird.

Zur weiteren Erhöhung der Aufmerksamkeit und Unterscheidung von handlungskritischen Anweisungen kann die Lautstärke der Sprachausgabe bei handlungskritischen Anweisungen erhöht werden und/oder diese besonders hart bzw. abrupt eingeblendet werden.

Weiter kann das Sprach-Dialog-System derart ausgebildet sein, so daß beispielsweise zwischen einer Männer- und einer Frauenstimme gewählt werden kann, wobei dann bei handlungskritischen Anweisungen die eine und bei handlungsunkritischen Informationen oder Meldungen die andere Stimme vom System ausgewählt wird.

Zur Sicherstellung des work-flows wird das Sprach-Dialog-System nur durch Betätigung eines "Push to talk" PTT-Schalters aktiviert, wobei bei Ausbleiben einer gültigen Interaktion die Dialog-Kommunikations-Ebene gewechselt wird. Zur Erhöhung der Erkennungssicherheit bzw. zur Verbesserung der Nutzerführung können einzelne Kommandos in verschiedenen alternativen Ausgabeformen abgespeichert sein, die dann bei einer ungültigen Interaktion sukzessive ausgegeben werden, wobei die Dialog-Kommunikations-Ebene erst gewechselt wird, wenn auf alle Kommandoformen keine gültige Interaktion erfolgt ist. Zur Vermeidung von Monotonie kann die Reihenfolge der Ausgabe durch einen Zufallsgenerator permutiert werden.

Der Grundgedanke der Erfindung besteht darin, durch die Art der Sprachausgabe beim Kraftfahrzeugführer eine Emotion zu wecken, die ein situationsgerechtes Handeln provoziert.

Die Erfindung wird nachfolgend anhand eines bevorzugten Ausführungsbeispiels näher erläutert. Die Fig. zeigen:

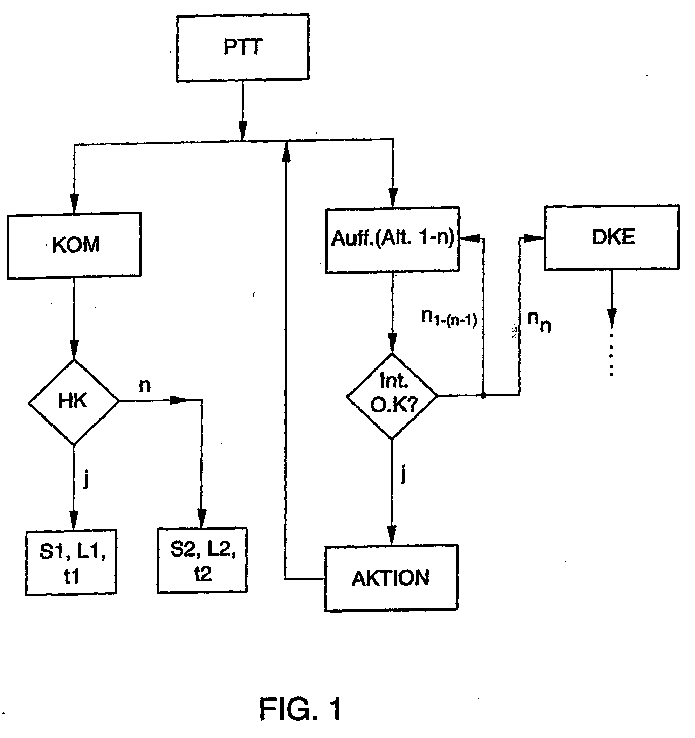

- Fig. 1: ein schematisches Flußdiagramm des Verfahrens zur automatischen Steuerung mindestens eines Gerätes per Sprachdialog,
- Fig.2a: einen schematischen Verlauf des Gefahrenpotentials bei handlungsunkritischen Interaktionen,
- Fig. 2b: einen zugehörigen Denotationsverlauf,
- Fig. 2c: einen zugehörigen Intonationsverlauf,
- Fig. 2d: einen zugehörigen Konnotationsverlauf,
- Fig. 3a: einen schematischen Verlauf des Gefahrenpotentials bei handlungskritischen Interaktionen,
- Fig. 3b: einen zugehörigen Denotationsverlauf,
- Fig. 3c: einen zugehörigen Intonationsverlauf und
- Fig. 3d: einen zugehörigen Konnotationsverlauf.

Durch die Betätigung eines PTT-Schalters wird das Sprach-Dialog-System aktiviert. Zum besseren Verständnis wird die Sprachausgabe des Sprachdialog-Systems in Kommandos KOM und Aufforderungen Auff unterteilt, die in Realität identisch sein können. Nachfolgend wird unter Kommandos KOM eine direkte Anweisung zum Handeln verstanden, wie beispielsweise "BREMSEN", "LICHTEINSCHALTEN", wohingegen Aufforderungen Auff eine Interaktion in Form einer Eingabe anfordern, wie beispielsweise "Bitte gewünschte Temperatur in Grad Celsius angeben".

Erzeugt nun das Sprach-Dialog-System ein Kommando KOM, so wird dieses Kommando KOM danach unterteilt, ob es sich um eine handlungskritische Anweisung oder eine handlungsunkritische Anweisung handelt. Vereinfacht sind handlungskritische Anweisungen, Kommandos KOM, die ein schnelles Durchführen der Handlung erfordern. Ein Beispiel hierfür ist das Kommando KOM "Bremsen", wenn ein ADR-System oder eine Prescrash-Sensorik ein Kollisionsobjekt erfaßt haben. Handlungsunkritische Anweisungen sind beispielsweise Kommandos KOM eines Navigationssystems. Dabei werden handlungskritische Anweisungen mit einer Befehlsintonations-Sprache S1, mit großer Lautstärke L1 hart und abrupt in einer Zeit t1 eingeblendet, um beim Nutzer einen hohen Aufmerksamkeitsgrad zu erzeugen. Handlungsunkritische Anweisungen werden hingegen weich bei geringerer Lautstärke L2 und normaler Intonation S2 eingeblendet.

Aufforderungen Auff sind in der Regel zeitunkritisch, so daß hier ein gute Benutzerführung im Vordergrund steht. Dazu kann eine Aufforderung Auff in n verschiedenen Alternativen im Sprachspeicher abgelegt sein. Die Alternativen können beispielsweise unterschiedliche Betonungen, Aussprachen, Wortumstellungen oder synonyme Begriffe sein. Nach akustischer Ausgabe der ersten Alternative wartet das Sprach-Dialog-System eine vorgegebene Zelt auf eine Interaktion. Erfolgt innerhalb dieser Zeit keine oder eine ungültige Interaktion, so wiederholt das Sprach-Dialog-System die Aufforderung mit der zweiten Alternative, gegebenenfalls bis zur n-ten Alternative. Erfolgt eine gültige Interaktion, so wird diese ausgeführt und gegebenenfalls eine neue Aufforderung Auff ausgegeben. Erfolgt hingegen auf die n-te Alternative der Aufforderung Auff keine gültige Interaktion, so wird auf eine andere Dialog-Kommunikations-Ebene DKE gewechselt, um den work-flow sicherzustellen. Die neue Dialog-Kommunikatons-Ebene DKE ist dann beispielsweise eine Auswahlliste, die auf dem Bordmonitor dargestellt wird, woraus sich der Nutzer ein entsprechendes Menü auswählen kann.

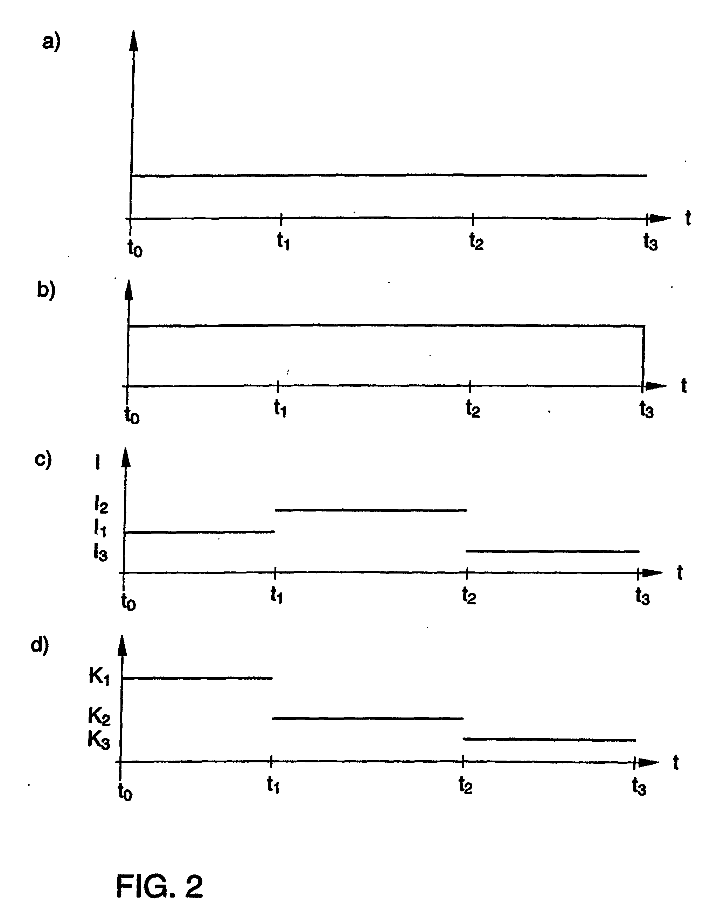

In den Fig. 2a-d sind schematisch die Verhältnisse für eine handlungsunkritische Anweisung, wie beispielsweise eine Angabeanforderung für ein Navigationssystem, dargestellt. Dabei ist in Fig. 2a die Wichtigkeit der Interaktion über die Zeit t aufgetragen, wobei zu den Zeitpunkten tₒ - t₂ Handlungsanweisungen ausgegeben werden, wobei angenommen wird, daß auf jede vorangegangenen Aufforderung nicht reagiert wurde. Da eine fehlende Eingabe in das Navigationssystem nur dazu führt, daß diese Komfortkomponente nicht arbeiten kann, was gegebenenfalls auch nicht vom Kraftfahrzeugführer erwünscht ist, ändert sich die Wichtigkeit über die Zeit nicht. Ebenso bleibt der die Inhaltsangabe des Befehls, die sogenannte Denotation, nämlich die Eingabeanforderung über die Zeit konstant, was in Fig. 2b dargestellt ist. Zum Zeitpunkt tₒ wird nun beispielsweise der Kraftfahrzeugführer aufgefordert, "Bitte geben Sie nun Ihr gewünschtes Fahrziel ein". Diese Aufforderung erfolgt mit einer bestimmten Intonation l₁ und einem bestimmten Begriffsinhalt (Konnotat) K1, was in Fig. 2c-d dargestellt ist. Erfolgt nun keine Eingabe, so weiß das System nicht, warum dies unterblieben ist, beispielsweise ob der Kraftfahrzeugführer die Aufforderung überhöht hat oder willentlich nicht vorzunehmen gedenkt. Daher erfolgt zum Zeitpunkt t₁ eine erneute Aufforderung "Wollen Sie ein Fahrziel eingeben" mit einer verstärkten Intonation l₂, um eine verbesserte Wahrnehmbarkeit zu erreichen, wobei jedoch die Konnotationsstufe K2 abnimmt. Erfolgt hierauf wieder keine Eingabe, so kann das System davon ausgehen, daß dies der Kraftfahrzeugführer wohl nicht wünscht. Um die Belästigung des Kraftfahrzeugführeres durch permanente Wiederholungen gering zu halten, erfolgt dann zum Zeitpunkt t₂ eine letztmalige Aufforderung, wie beispielsweise "Falls Sie keinen Zielort wünschen, schalte ich mich jetzt ab". Diese letzte Aufforderung wird mit einer sehr geringen Intonation 13 ausgegeben und weist nur noch eine geringe Konnotation auf. Wie aus dem Verlauf in Fig. 2d zu entnehmen ist, bildet die Konnotation einen Antiklimax, also einen Übergang vom stärkeren zum schwächeren Ausdruck, wohingegen bei der Intonation eine gewisse Variation auftritt, um Monotonie entgegenzuwirken.

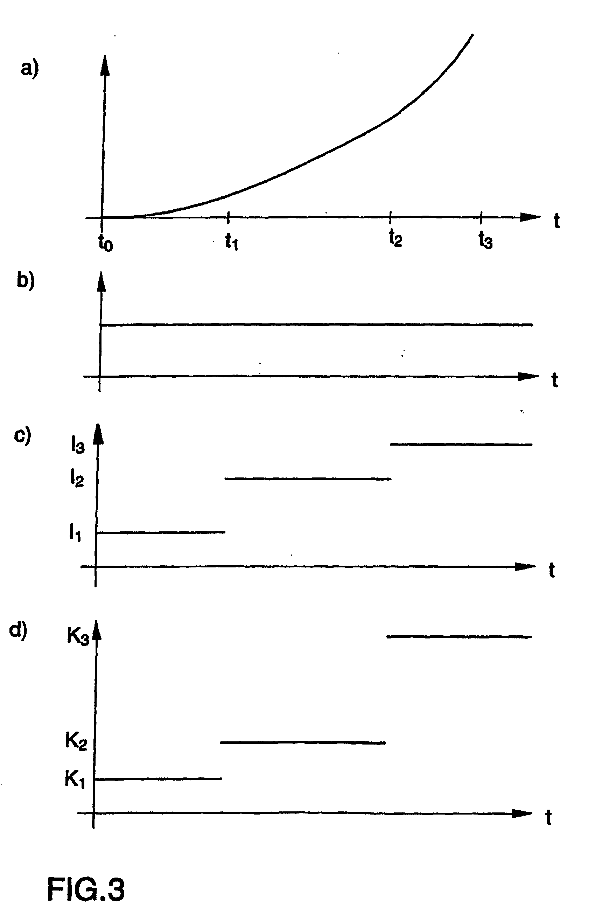

Im Gegensatz hierzu ist in Fig. 3a-d eine Situation dargestellt, bei der Wichtigkeit der Interaktion mit der Zeit zunimmt und schließlich handlungskritisch wird. Beispielsweise fährt das Kraftfahrzeug mit einer Geschwindigkeit oberhalb einer zugelassenen Geschwindigkeit auf der Autobahn unter Einhaltung des Sicherheitsabstandes hinter einem Kraftfahrzeug hinterher. Zum Zeitpunkt tₒ gibt das System eine Handlungsanweisung, beispielsweise der Form "Bitte passen Sie Ihre Geschwindigkeit an", an den Kraftfahrzeugführer. Die Handlungsanweisung weist einen geringen Intonationsgrad I₁ und eine entsprechend geringe Konnotationsstufe K1 auf, da der Kraftfahrzeugführer zwar eine Ordnungswidrigkeit begeht, jedoch keine unmittelbare Gefahr besteht. Weiter sei angenommen, daß nun der Kraftfahrzeugführer seine Geschwindigkeit nicht anpaßt und zusätzlich zum Zeitpunkt t₁ der Sicherheitsabstand bereits knapp unterschritten wird, d.h. das Gefahrenpotential der Verkehrssituation nimmt zu, was durch die ansteigende Kurve in Fig. 3a symbolisiert wird.

Das System gibt daraufhin eine Handlungsanweisung, beispielsweise der Form "Sie müssen bremsen" oder "Bitte bremsen Sie" an den Kraftfahrzeugführer, wobei diese einen höheren Intonationsgrad I₂ mit entsprechend höherer Konnotationsstufe K2 aufweist. Reagiert der Kraftfahrzeugführer auch hierauf nicht, so wird das Gefahrenpotential der Verkehrssituation noch gesteigert, was anhand des weiteren Anstiegs in Fig. 3a dargestellt ist. Dies bedeutet, daß ein weiteres Nicht-Reagieren des Kraftfahrzeugführers innerhalb kürzester Zeit zu einem Unfall führen könnte. Diese handlungskritische Anweisung wird beispielsweise in der Form "Vollbremsung" mit einer Befehlsintonation I₃ ausgegeben. Die in Fig. 3d dargestellten Konnotationsstufen stellen dabei einen Klimax dar, also die Steigerung des Ausdrucks vom weniger Wichtigen zum Wichtigeren. Ergänzend sei angemerkt, daß die in Fig. 2a-d und Fig. 3a-d dargestellten Veränderungen nicht maßstäblich sind, sondern nur als qualitative Angaben zu verstehen sind.

## Patentansprüche

1. Verfahren zur Ausgabe von Informationen und/oder Meldungen mindestens eines elektrischen Gerätes per Sprache, wobei die für die Sprachausgabe benötigten Informationen und/oder Meldungen (KOM; Auff) in einem Sprachspeicher abgelegt sind und von einer Verarbeitungseinrichtung nach Anforderung ausgelesen und über eine akustische Ausgabeeinrichtung, insbesondere einem Lautsprecher ausgegeben werden,
**dadurch gekennzeichnet, daß**
die Informationen und/oder Meldungen (KOM; Auff) je nach Relevanz mit unterschiedlichen Intonationen (I) ausgegeben werden.

2. Verfahren nach Anspruch 1,
**dadurch gekennzeichnet, daß**
handlungskritische Informationen und/oder Meldungen (KOM) mit Befehlsintonation (I) ausgegeben werden.

3. Verfahren nach Anspruch 1 oder 2,
**dadurch gekennzeichnet, daß**
zumindest handlungskritische Informationen und/oder Meldungen (KOM) mit einer höheren Lautstärke (L1) ausgegeben werden.

4. Verfahren nach einem der Ansprüche 1 bis 3,
**dadurch gekennzeichnet, daß**
handlungskritische Informationen und/oder Meldungen (KOM) hart eingeblendet werden.

5. Verfahren nach einem der Ansprüche 1 bis 4,
**dadurch gekennzeichnet, daß**
die Informationen und/oder Meldungen (KOM, Auff) im Sprachspeicher in einer Männer- und einer Frauenstimme abgelegt sind, wobei bei handlungsunkritischen Informationen oder Meldungen (KOM) die eine, und bei handlungskritischen Anweisungen die andere Stimme ausgewählt wird.

6. Verfahren nach einem der Ansprüche 1 bis 5,
**dadurch gekennzeichnet, daß**
zumindest bei handlungskritischen Informationen und/oder Meldungen (KOM) die Intonation (I) und die Konnotation (K) entsprechend der Wichtigkeit gesteigert werden.

7. Verfahren nach einem der Ansprüche 1 bis 6,
**dadurch gekennzeichnet, daß**
bei handlungsunkritischen Informationen und/oder Meldungen (KOM) die Intonation (I) bei abnehmender Konnotation (K) variiert werden.

8. Verfahren nach einem der Ansprüche 1 bis 7,
**dadurch gekennzeichnet, daß**
es Teil eines Verfahrens zur Steuerung mindestens eines elektrischen Gerätes per Sprachdialog ist.

9. Verfahren nach einem der vorangegangenen Ansprüche,
**dadurch gekennzeichnet, daß**
in dem Sprachspeicher Aufforderungen (Auff) in verschiedenen Alternativen abgelegt sind, wobei bei Ausbleiben einer Interaktion auf eine Aufforderung (Auff) die Alternativen sukzessive ausgegeben werden, bis eine Interaktion erfolgt oder bei Ausbleiben einer Interaktion auf die letzte Alternative die Dialog-Kommunikations-Ebene (DKE) gewechselt wird.

10. Vorrichtung zur Ausgabe von Informationen und/oder Meldungen mindestens eines elektrischen Gerätes per Sprache mit einem Sprachspeicher, in dem die Daten der für die Sprachausgabe benötigten Informationen und/oder Meldungen (KOM) abgelegt sind, einer Verarbeitungseinrichtung und einer akustischen Ausgabeeinrichtung,
**dadurch gekennzeichnet, daß**
die Informationen und/oder Meldungen (KOM) je nach Relevanz mit unterschiedlichen Intonationen (I) ausgebbar sind.

## Claims

1. Method for outputting information items and/or messages of at least one electrical device by means of speech, the information items and/or messages (KOM; Auff) which are required for the outputting of speech being stored in a speech memory and being read out on request by a processing device and being output by means of a sound output device, in particular a loudspeaker, **characterized in that** the information items and/or messages (KOM; Auff) are output with different intonations (I) depending on their relevance.

2. Method according to Claim 1, **characterized in that** information items and/or messages (KOM) which are critical in terms of action are output with a command intonation (I).

3. Method according to Claim 1 or 2, **characterized in that** at least information items and/or messages (KOM) which are critical in terms of action are output with a higher volume (L1).

4. Method according to one of Claims 1 to 3, **characterized in that** information items and/or messages (KOM) which are critical in terms of action are faded in abruptly.

5. Method according to one of Claims 1 to 4, **characterized in that** the information items and/or messages (KOM, Auff) are stored in the speech memory in a male voice and a female voice, one voice being selected for information items or messages (KOM) which are uncritical in terms of action, and the other voice being selected for instructions which are critical in terms of action.

6. Method according to one of Claims 1 to 5, **characterized in that** the intonation (I) and the connotation (K) are increased in accordance with the importance, at least in the case of information items and/or messages (KOM) which are critical in terms of action.

7. Method according to one of Claims 1 to 6, **characterized in that**, in the case of information items and/or messages (KOM) which are uncritical in terms of action, the intonation (I) is varied when the connotation (K) decreases.

8. Method according to one of Claims 1 to 7, **characterized in that** it is part of a method for controlling at least one electrical device by means of speech dialogue.

9. Method according to one of the preceding claims, **characterized in that** various alternative requests (Auff) are stored in the speech memory, in which case, when there is no interaction to a request (Auff), the alternatives are successively output until an interaction takes place or, when there is no interaction to the last alternative, the dialogue-communications level (DKE) is changed.

10. Device for outputting information items and/or messages of at least one electrical device by means of speech with a speech memory in which the data of the information items and/or messages (KOM) which are required for the outputting of speech are stored, a processing device and a sound output device, **characterized in that** the information items and/or messages (KOM) can be output with different intonations (I) depending on their relevance.

## Revendications

1. Procédé de sortie d'informations et/ou de messages d'au moins un appareil électrique par langue, dans lequel les informations et/ou les messages (COM; INV) nécessaires à la sortie vocale sont stockés dans un mémoire vocale et sont extraits par un dispositif de traitement en fonction des besoins et sortis via un dispositif de sortie acoustique, en particulier un haut-parleur; **caractérisé en ce que** les informations et/ou les messages (COM; INV) sont sortis en fonction de leur importance avec différentes intonations (I).

2. Procédé selon la revendication 1, **caractérisé en ce que** des informations et/ou des messages (COM) critiques au plan de l'action sont sortis avec une intonation de commande (I).

3. Procédé selon la revendication 1 ou 2, **caractérisé en ce qu'**au moins des informations et/ou des messages (COM) critiques au plan de l'action sont sortis avec une intensité sonore plus élevée (L1).

4. Procédé selon l'une quelconque des revendications 1 à 3, **caractérisé en ce que** des informations et/ou des messages (COM) critiques au plan de l'action sont renforcés progressivement.

5. Procédé selon l'une quelconque des revendications 1 à 4, **caractérisé en ce que** les informations et/ou les messages (COM; INV) sont stockés dans la mémoire vocale avec une voix d'homme et une voix de femme, où, dans le cas d'informations ou de messages (COM) non critiques au plan de l'action, on choisit l'une voix et, dans le cas d'instructions critiques au plan de l'action, on choisit l'autre voix.

6. Procédé selon l'une quelconque des revendications 1 à 5, **caractérisé en ce qu'**au moins dans le cas d'informations et/ou de messages (COM) critiques au plan de l'action, on augmente l'intonation (I) et la connotation (K) en fonction de l'importance.

7. Procédé selon l'une quelconque des revendications 1 à 6, **caractérisé en ce que**, dans le cas d'informations et/de messages (COM) non critiques au plan de l'action, on fait varier l'intonation (I) tout en réduisant la connotation (K).

8. Procédé selon l'une quelconque des revendications 1 à 7, **caractérisé en ce qu'**il s'agit d'une partie d'un procédé de commande d'au moins un appareil électrique par dialogue vocal.

9. Procédé selon l'une quelconque des revendications précédentes, **caractérisé en ce que** des invitations sont stockées dans la mémoire vocale (INV) dans diverses options, dans lequel, lorsqu'il ne se produit pas d'interaction suite à une invitation (INV), les options sont sorties successivement jusqu'à ce qu'une interaction se produise ou, lorsqu'il n'y a pas d'interaction avec la dernière option, le niveau de communication par dialogue (DKE) est modifié.

10. Dispositif de sortie d'informations et/ou de messages d'au moins un appareil électrique par langue, comprenant une mémoire vocale, dans laquelle les données des informations et/ou messages (COM) nécessaires pour la sortie vocale sont stockées, un dispositif de traitement et un dispositif de sortie acoustique, **caractérisé en ce que** les informations et/ou les messages (COM) peuvent être sortis en fonction de l'importance avec des différentes intonations (I).
